# EUROPEAN PATENT SPECIFICATION

(11) **EP 4 328 124 B1**
(45) Date of publication and mention of the grant of the patent: **03.09.2025**
(21) Application number: 23193472.0
(22) Date of filing: 25.08.2023
(51) Int. Cl.: B62K 25/02, B62K 19/30, B62K 13/00, B62M 9/125, B60B 27/02

(54) **BICYCLE FRAME WITH CONVERTIBLE WHEEL MOUNT**
FAHRRADRAHMEN MIT WANDELBARER RADHALTERUNG
CADRE DE VÉLO AVEC SUPPORT DE ROUE CONVERTIBLE

(30) Priority: 25.08.2022 US 202217895914
(43) Date of publication of application: 28.02.2024
(73) Proprietor: Specialized Bicycle Components, Inc., Morgan Hill, CA 95037 (US)
(72) Inventor: MELOTTI, Matteo, St. Silvester (CH)
(74) Representative: Forresters IP LLP

(56) References cited:
- CN-U- 209 126 903
- US-A1- 2016 159 427
- US-A1- 2022 144 381

## Description

### CROSS-REFERENCE TO RELATED APPLICATIONS

This application claims priority to U.S. Application No. 17/895,914, filed August 25, 2022.

### BACKGROUND

The present disclosure relates generally to the field of wheel mounts for bicycle frames and specifically to wheel mounts that can be converted to accept different styles of wheel axles.

Bicycle frames typically include a rear wheel mount (e.g., a left wheel mount and a right wheel mount) adapted to receive and be supported on a rear wheel axle. One type of rear wheel mount is commonly called an "open dropout" that includes an open slot adapted to receive what is often called a "quick-release (QR) axle" that can be tightened to secure the rear wheel hub to the dropout. Such QR axles are commonly 10 mm in diameter and are often paired with wheel hubs having widths of 130 mm or 135 mm, although other sizes do exist.

Another type of rear wheel mount is sometimes called a "closed dropout" or "thru-axle mount" and includes a through hole on one wheel mount and a threaded hole in the other wheel mount. The holes are frequently dimensioned to receive a 12 mm "thru-axle" that can be tightened to secure the wheel hub to the wheel supports. Thru axles are commonly paired with wheel hubs having OLD (over locknut distance) (between the dropouts or wheel supports) of 142 mm or 148 mm, although other sizes do exist.

Another type of rear wheel mount is adapted to receive a wheel having an internal gear hub ("IGH"). The IGH includes an IGH axle having a left axle end and a right axle end protruding from the hub. Like the above-described QR axles, IGH axles are commonly 10 mm in diameter, although 12 mm diameter is sometimes used. However, the ends of the 10mm IGH axles that fit into the dropouts have 8 mm flats (10 mm flats on a 12mm axle) that prevent rotation of the axle relative to the dropouts. As such, the dropouts for IGH hubs have narrower slots that are adapted to receive the 8 mm flats on the IGH axles.

When the rear wheel mounts are to be used with a rear wheel having multiple gear cogs, the right wheel mount will typically be provided with a rear derailleur mount. But when using an IGH wheel, a rear derailleur is usually not used, so a rear derailleur mount is not needed.

CN 209 126 903 discloses a type of front fork and constitutes the prior art closest to the subject-matter of independent claims 1 and 7. It discloses a bicycle front fork comprising:
a left wheel support including: a left hole extending through the left wheel support in a direction parallel to a wheel axis, the left hole having a first width perpendicular to the wheel axis; and a left slot extending through the left wheel support and in communication with the left hole, the left slot having a second width smaller than the first width such that the left hole and left slot cooperatively form a left keyhole through the left wheel support,
a right wheel support including: a right hole extending through the right wheel support in a direction parallel to the wheel axis, the right hole having a third width perpendicular to the wheel axis; and a right slot extending through the right wheel support and in communication with the right hole, the right slot having a fourth width smaller than the third width such that the right hole and right slot cooperatively form a right keyhole through the right wheel support, and
a right spacer including: a right torque arm removably positioned in the right slot; and a right axle hole having a drive flat.

### SUMMARY

The present invention provides a bicycle frame as claimed in claim 1 and a method as claimed in claim 7.

### BRIEF DESCRIPTION OF THE DRAWINGS

Fig. 1 is a side view of a bicycle having a rear wheel mount embodying the present disclosure.
Fig. 2 is a left rear perspective view of left and right rear wheel supports with a thru-axle wheel hub.
Fig. 3 is a left rear exploded view of the rear wheels supports and thru axle wheel hub of Fig. 2.
Fig. 4 is a right rear exploded view of the rear wheel supports and thru axle wheel hub of Fig. 2.
Fig. 5 is a right side view of the left wheel support.
Fig. 6 is a left side view of the right wheel support.
Fig. 7 is a left side view of a universal derailleur hanger.
Fig. 8 is a section view taken along line 8-8 in Fig. 2.
Fig. 9 is a left rear perspective view of rear wheel supports with a solid axle internal gear hub.
Fig. 10 is a left rear exploded view of the assembly shown in Fig. 9.
Fig. 11 is a right rear exploded view of the assembly shown in Fig. 9.
Fig. 12 is an enlarged perspective view of a left end of a solid axle of the assembly shown in Fig. 9

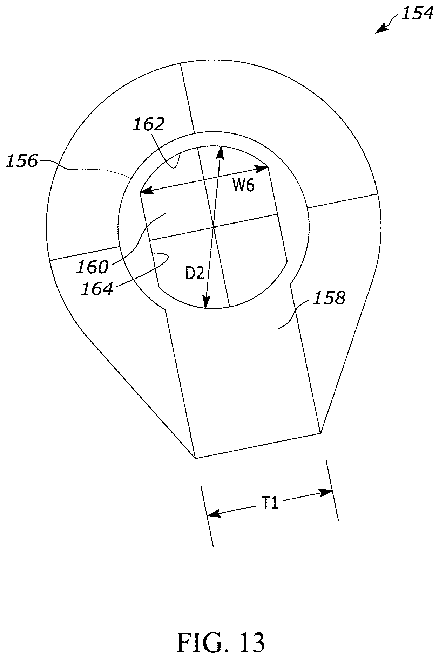

Fig. 13 is a right side view of a left spacer of the assembly in Fig. 9.

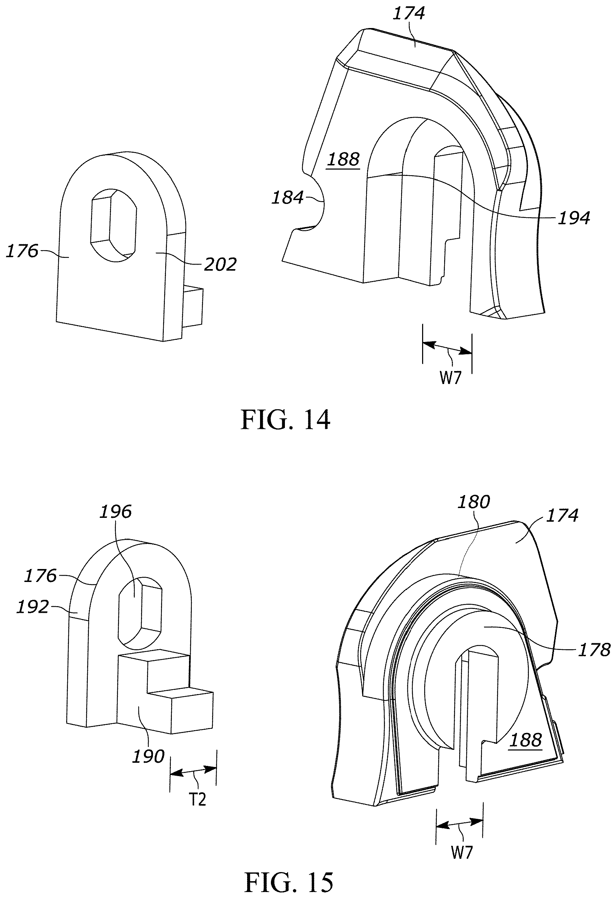

Fig. 14 is a left rear perspective view of a right spacer assembly.
Fig. 15 is a right rear perspective view of the right spacer assembly.

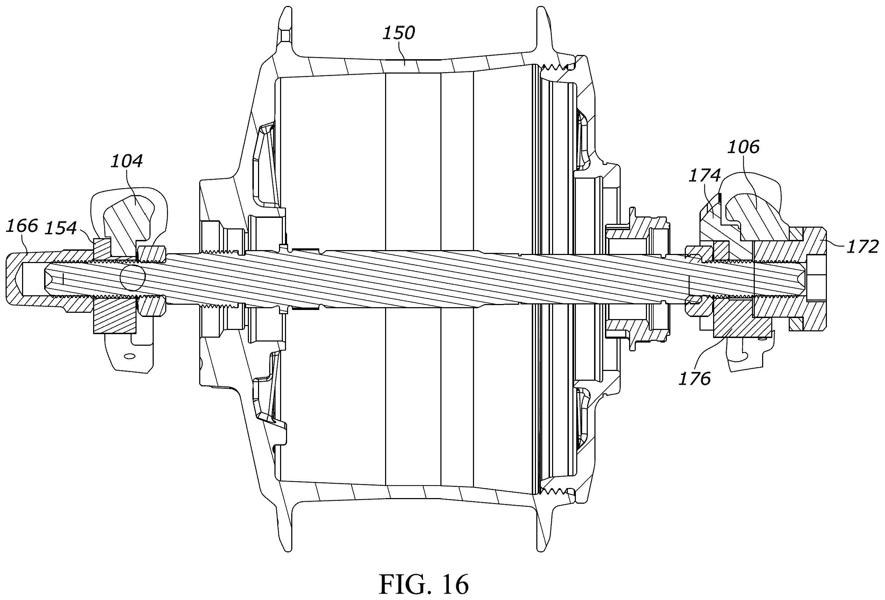

Fig. 16 is a section view taken along line 16-16 in Fig. 9.

### DETAILED DESCRIPTION

In summary, the present disclosure provides a bicycle comprising a front wheel, a rear wheel including a rear axle defining a wheel axis, and a frame supported on both the front wheel and the rear wheel. The frame includes a left wheel support and a right wheel support that are each adapted to receive and be supported by the rear axle. The left wheel support includes a left hole extending through the left wheel support in a direction parallel to the wheel axis, the left hole having a first width perpendicular to the wheel axis, and a left slot extending through the left wheel support and in communication with the left hole. The left slot has a second width smaller than the first width such that the left hole and left slot cooperatively form a left keyhole through the left wheel support. The right wheel support includes a right hole extending through the right wheel support in a direction parallel to the wheel axis, the right hole having a third width (e.g., larger than the first width) perpendicular to the wheel axis, and a right slot extending through the right wheel support and in communication with the right hole. The right slot has a fourth width (e.g., substantially the same as the second width) smaller than the third width such that the right hole and right slot cooperatively form a right keyhole through the right wheel support. In one embodiment, the bicycle further comprises a left spacer removably positioned in the left keyhole, the left spacer including a base portion (e.g., including a left axle hole with at least one drive flat) positioned in the left hole and a left torque arm positioned in the left slot. According to the invention, the bicycle comprises a right spacer including a right axle hole with at least one drive flat and a right torque arm removably positioned in the right slot. The right spacer includes an inner spacer including the torque arm and the right axle hole with two drive flats, and an outer spacer non-rotatably positioned between the inner spacer and the right wheel support. The outer spacer preferably includes an axle slot aligned with the right slot in the right wheel support.

In summary, the present disclosure also provides a method of converting the above bicycle having a first wheel type with a first axle to a bicycle having a second wheel type. The method comprises removing the first axle from the frame and from the first wheel type; inserting a second axle of the second wheel type in the left keyhole; sliding a left spacer onto the second axle and into the left keyhole; positioning a left torque arm of the left spacer in the left slot; and tightening the second axle to the frame. According to the invention, the method further includes sliding a right spacer onto the second axle and into the right keyhole, and positioning a right torque arm of the right spacer in the right slot.

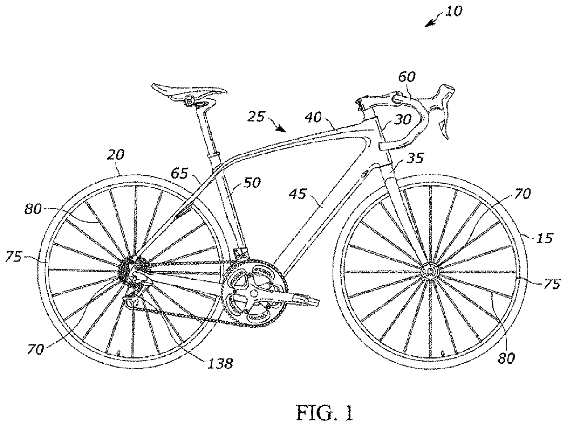

Fig. 1 shows a bicycle 10 that includes a front wheel 15, a rear wheel 20, and a frame 25. The frame 25 may include a head tube 30, a front fork 35 rotationally supported by the head tube 30, a top tube 40 connected to and extending rearward from the head tube 30, and a down tube 45 connected to the head tube 30 below the top tube 40 and extending generally downward toward a bottom bracket (not shown) of the frame 25. A seat tube 50 may extend upward from the bottom bracket and be connected to the top tube 40, and a seat may be supported by the seat tube 50. The bicycle 10 may also include a handlebar 60 for turning the front wheel 15 via the fork 35, and the frame 25 may include a rear frame triangle 65 having rear wheel supports that support the rear wheel 20. In the illustrated embodiment, each wheel 15, 20 includes a hub 70, a rim 75 supported by the hub 70 via spokes 80 (or other wheel reinforcement members), and a tire that is engaged with the rim 75.

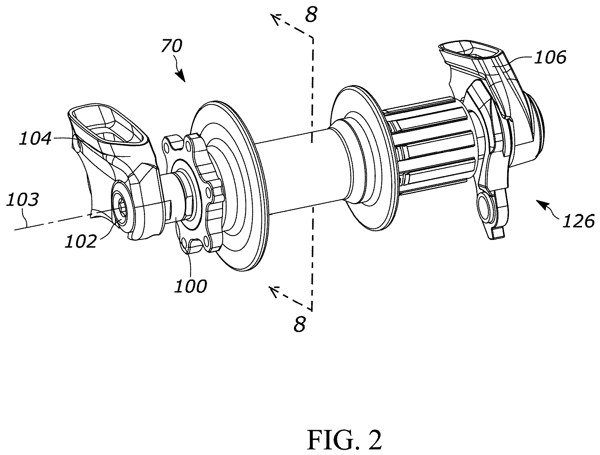

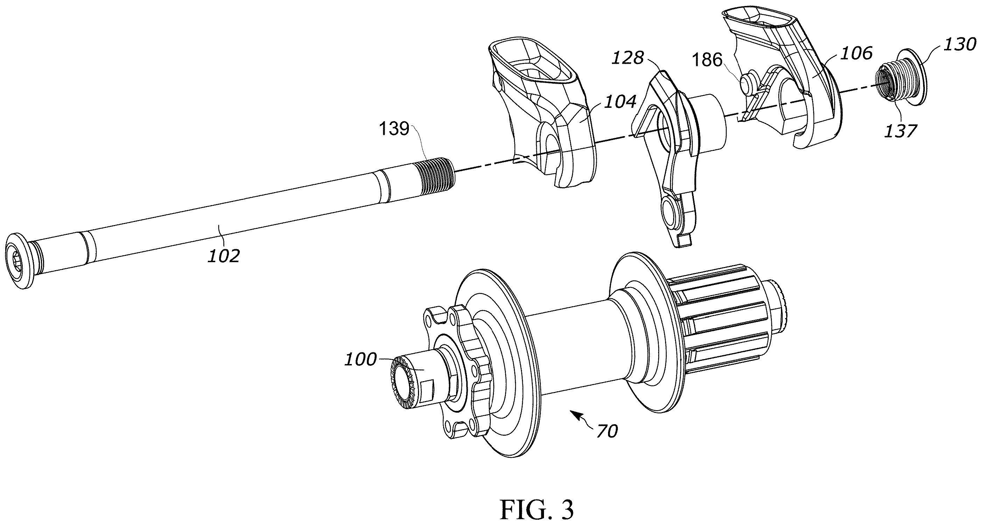

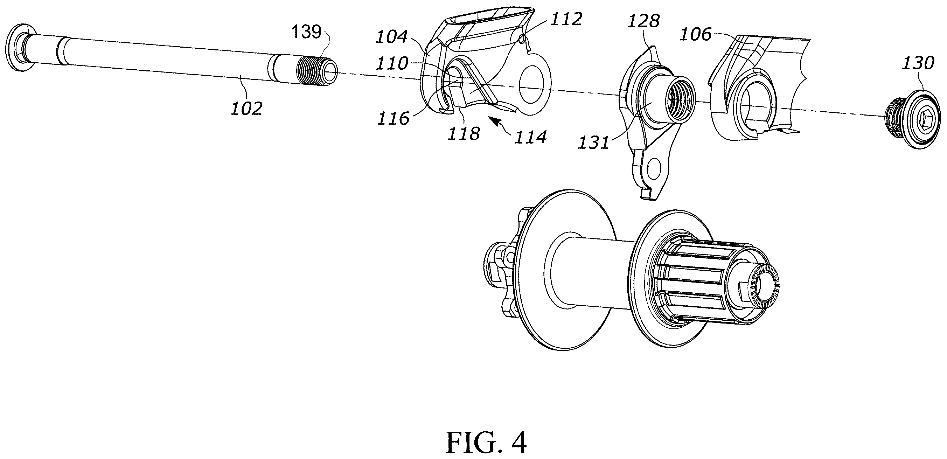

Figs. 2-7 illustrate a thru axle wheel hub 70 having a hub axle 100 and a thru axle 102 that support the rear wheel for rotation about a wheel axis 103. The illustrated rear wheel supports of the frame include a left wheel support 104 and a right wheel support 106 that are each adapted to receive and be supported by the thru axle 102. The left wheel support 104 may include a left inside face 110 and a left guiding groove 112 to guide the hub axle 100 into the proper position on the left inside face 110. The left wheel support 104 further includes a left keyhole 114 including a left hole 116 and a left slot 118. The left hole 116 extends through the left wheel support 104 in a direction parallel to the wheel axis 103 and has a first width W1 perpendicular to the wheel axis 103. The left slot 118 extends through the left wheel support and is in communication with the left hole 116. The left slot 118 has a second width W2 that is smaller than the first width W1 such that the left hole 116 and left slot 118 cooperatively form the left keyhole 114 through the left wheel support 104. In the illustrated embodiment, the first width W1 is a diameter of about 12.2 mm and the second width W2 is about 8.2 mm.

In the illustrated embodiment, the right wheel support 106 comprises a right keyhole 120 including a right hole 122 and a right slot 124. The right hole 122 extends through the right wheel support 106 in a direction parallel to the wheel axis 103 and has a third width W3 perpendicular to the wheel axis 103. The right slot 124 extends through the right wheel support 106 and is in communication with the right hole 122. The right slot 124 has a fourth width W4 smaller than the third width W3 such that the right hole 122 and right slot 124 cooperatively form the right keyhole 120 through the right wheel support 106. In the illustrated embodiment, the third width W3 is a diameter of about 20 mm, and the fourth width W4 is about 8.2 mm.

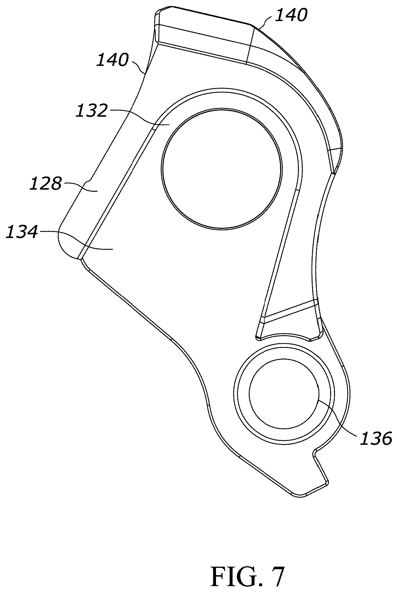

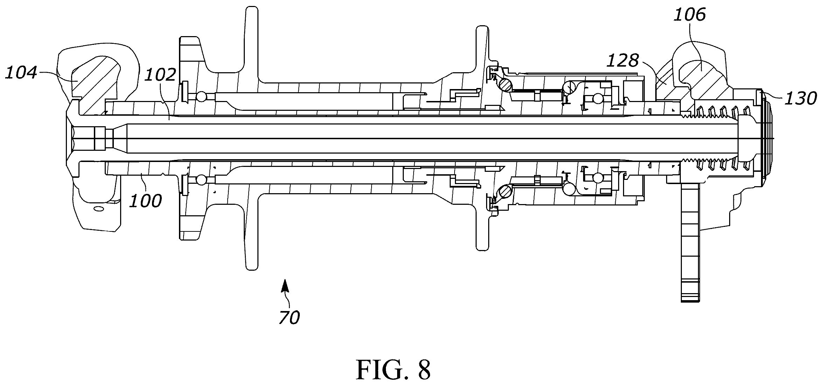

The bicycle illustrated in Figs. 1-8 further includes a derailleur hanger 126 (Fig. 2) secured to the right wheel support 106. The illustrated derailleur hanger 126 is a universal derailleur hanger ("UDH") having an inner hanger part 128 threaded with an outer screw 130 with the right wheel support 106 sandwiched in between. The inner hanger part 128 may include a cylindrical portion 131 dimensioned to be snugly positioned in the right hole 122 of the right wheel support 106, the cylindrical part having an internal thread dimensioned to mate with external threads on the outer screw 130. The inner hanger part 128 may further include a right inside face 132 and a right guiding groove 134 (Fig. 7) to guide the hub axle 100 into the proper position on the right inside face 132. The inner hanger part 128 may further include a threaded derailleur hole 136 for receiving and supporting a rear derailleur 138 (Fig. 1). The outer screw 130 may further include a threaded opening 137 dimensioned to mate with a threaded end 139 of the thru axle 102.

An outer perimeter 140 of the inner hanger part 128 engages with a cylindrical boss 186 on the right wheel support 106 to limit rotation of the derailleur hanger 126 relative to the frame. With the derailleur hanger 126 mounted to the right wheel support 106, the distance between the left inside face 110 of the left wheel support 104 and the right inside face 132 of the derailleur hanger 126 defines a hub spacing of about 148 mm.

In the configuration of Figs 2-8, a rear wheel having a thru axle hub 70 is slid in between the right and left wheel supports 104,106 so that the hub axle 100 rests in the right and left guiding grooves 112,134. The wheel and thru axle hub 70 may then be moved upward until the hub axle 100 is positioned between the left and right inside faces 110,132. The thru axle 102 may then be inserted through the left wheel support 104 and hub axle 100 and then threaded into the outer screw 130 of the derailleur hanger 126. Tightening the thru axle 102 to the outer screw 130 secures the rear wheel to the frame.

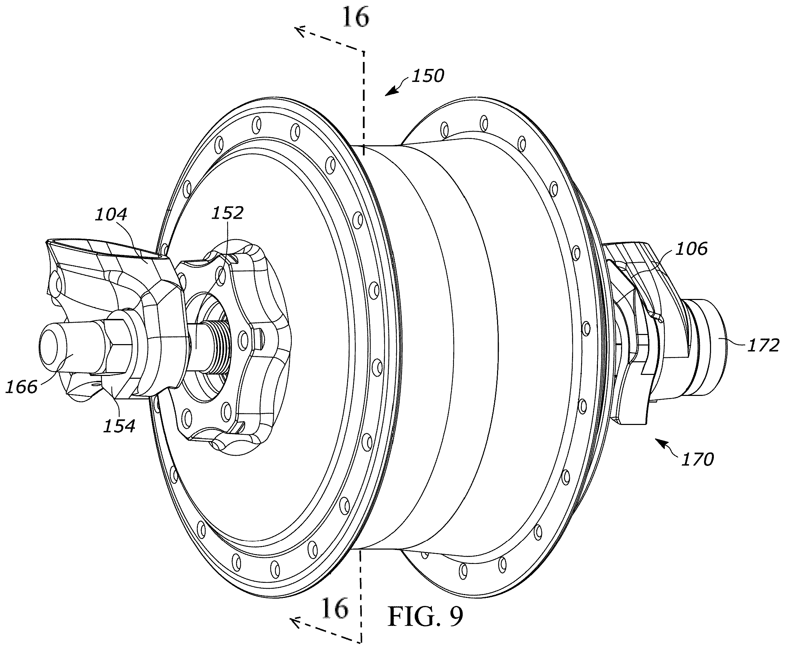

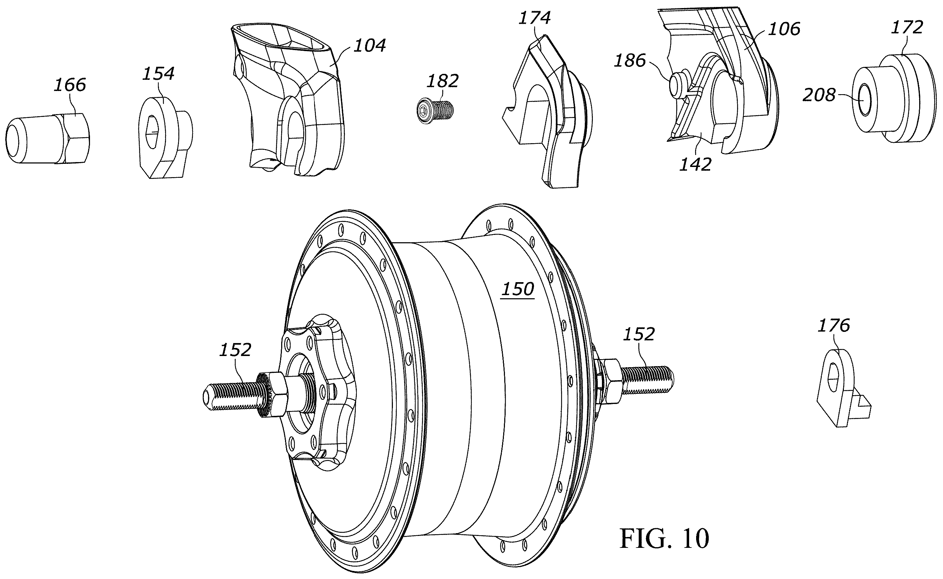

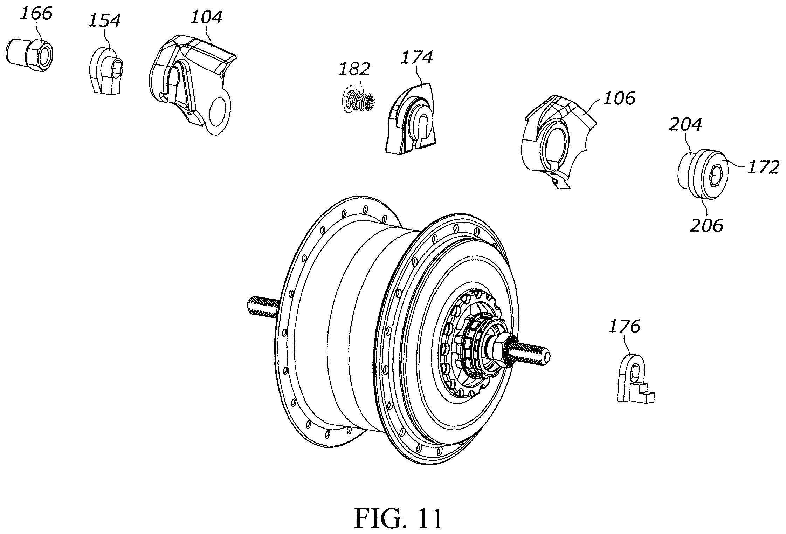

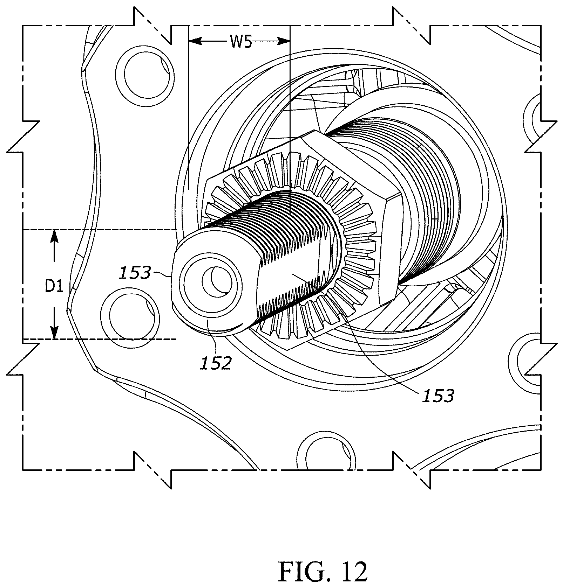

Figs. 9-12 illustrated the same bicycle frame and wheel supports 104,106, but with different inserts to permit the securing of an IGH wheel having an IGH hub 150 and IGH axle 152. The illustrated IGH axle 152 has an OLD of 148 mm, and each end of the IGH axle 152 has a threaded diameter D1 of 10 mm with opposing parallel flats 153 spaced from each other to define a width W5 of about 8 mm.

In this embodiment, the bicycle includes a left spacer 154 removably positioned in the left keyhole 114 from the left side. More specifically, the left spacer 154 includes a base portion 156 snugly positioned in the left hole 116 and a left torque arm 158 snugly positioned in the left slot 118 and having a thickness T1 of about 8 mm. The base portion 156 of the left spacer 154 may include an axle hole 160 having a generally cylindrical portion 162 with a diameter D2 of about 10.2 mm and opposing drive flats 164 that are spaced from each other by a width W6 of about 8.2 mm to thereby facilitate insertion of the IGH axle 152 into the axle hole 160. A left nut 166 may be threaded onto the left end of the IGH axle 152 to secure the axle to the left spacer 154 and left wheel support 104.

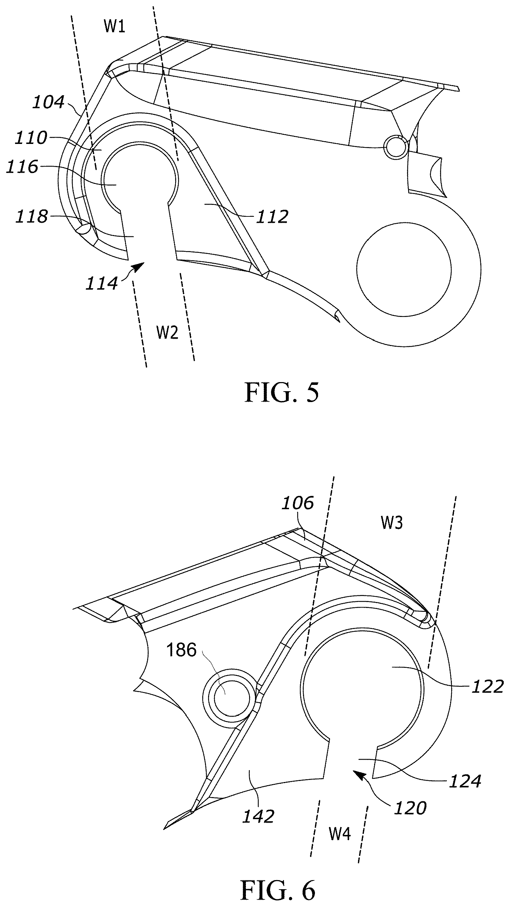

As illustrated in Figs. 6-9, the bicycle includes a right spacer 170 removably positioned in the right keyhole 120 on the inner side of the wheel support and a right nut 172 removably position in the right hole 122 from the outer side of the wheel support. The illustrated right spacer 170 comprises two parts: an outer spacer 174 and an inner spacer 176. The outer spacer 174 may include a cylindrical protrusion 178 adapted to fit in the right hole 122 and an outer perimeter 180 dimensioned to mate with the recess 142 on the inner face of the right wheel support 106. Rotation of the outer spacer 174 is further limited by the engagement of the cylindrical boss in a semicylindrical notch 184, and the outer spacer 174 may be secured to the inside face of the right wheel support 106 using a screw 182 threaded into the cylindrical boss 186. The outer spacer 174 includes an axle slot 188 aligned with the right slot 124 in the right wheel support 106. The axle slot 188 may have a width W7 of about 8.2 mm to receive the portion of the IGH axle having the parallel flats 153.

In the illustrated embodiment, the inner spacer 176 includes a right torque arm 190 removably positioned in the right slot 124 and an outer perimeter 192 dimensioned to mate with a recess 194 on an inner face of the outer spacer 174 to limit rotation of the inner spacer 176 relative to the outer spacer 174. The right torque arm 190 may have a thickness T2 of about 8 mm to facilitate removable insertion into the right slot 124 of the right keyhole 120. The inner spacer 176 includes an axle hole 196 having a generally cylindrical portion with a diameter of about 10.2 mm and opposing drive flats that are spaced from each other by a width of about 8.2 mm to thereby facilitate insertion of the IGH axle 152 into the axle hole 196. An inside face 202 of the inner spacer 176 may provide a surface against which the IGH axle 152 can be tightened.

The right nut 172 may include a cylindrical portion 204 adapted to be removably inserted into the right hole 122 of the right keyhole 120, and a larger portion 206 that limits the amount of insertion of the right nut 172 into the right hole 122. The cylindrical portion 204 may include a threaded opening 208 dimensioned to be threaded onto a threaded end of the IGH axle 152.

With the left spacer 154 and right spacer 170 mounted to the wheel supports 104,106 as shown in Figs. 6-9, the distance between the left inside face 110 of the left wheel support 104 and the inside face 202 of the right spacer 170 defines an OLD hub spacing of about 148 mm.

In the configuration of Figs. 6-9, the outer spacer 174 may be attached in the appropriate position on the inside face of the right wheel support 106 (e.g., using the screw 182 inserted through the notch 184 and into a threaded boss 186 in the right wheel support 106). The inner spacer 176 may then slide onto the right side of the IGH axle 152. The entire IGH hub 150 (with IGH axle 152) may then slide into the left and right keyholes 114,120 in the right and left wheel supports 104, 106. This results in the inner spacer 176 sliding in the recess 194 of the outer spacer 174. The left spacer 154 may then slide over the left end of the IGH axle 152 until the left spacer 154 is fully seated into the left keyhole 114. The left nut 166 and right nut 172 may then be threaded onto the left end and right end of the IGH axle 152, respectively. Tightening of the left nut 166 and right nut 172 may result in securement of the IGH hub 150 to the left and right wheel supports 104,106.

In can be appreciated from the above that, by using different parts and spacers, the above-described wheel supports can be selectively adapted to be used with either a thru axle wheel or an IGH wheel. For example, to make the bicycle frame suitable for a thru axle 102, the UDH 126 is secured to the right wheel support 106 by inserting the cylindrical portion 131 of the inner hanger part 128 into the right hole 122 of the right wheel support 106 and then threading the outer screw 130 into the inner hanger part 128 with the right wheel support 106 sandwiched in between. The wheel with the thru axle wheel hub 70 is them slid up in between the left and right wheel supports 104,106, and the thru axle 102 is inserted from the left and threaded securely into the outer screw 130.

To convert the thru axle arrangement to an IGH arrangement, the thru axle 102 is unthreaded and removed, the wheel is slid downward from between the wheel supports 104,106, and the outer screw 130 is unthreaded from the inner hanger part 128 to permit the UDH to be completely removed from the right wheel support 106. This leaves the wheel supports 104,106 bare and without any spacers.

Next, the cylindrical protrusion 178 of the outer spacer 174 is positioned in the right hole 122 of the right wheel support 106, and the screw 182 is used to secure the outer spacer 174 to the right wheel support 106. The inner spacer 176 is then slid onto the right side of the IGH axle 152, and the entire wheel with IGH hub 150 may then slide into the left and right keyholes 114,120 in the right and left wheel supports 104,106. This results in the inner spacer 176 sliding into the recess 194 of the outer spacer 174. The left spacer 154 may then slide over the left end of the IGH axle 152 until the left spacer 154 is seated into the left keyhole 114. The left nut 166 and right nut 172 may then be threaded onto the left end and right end of the IGH axle 152, respectively. Tightening of the left nut 166 and right nut 172 may result in securement of the IGH hub 150 to the left and right wheel supports 104, 106.

In some examples, and in general, the UDH 126 may be replaced by, or transformed into, one or more spacers (e.g., blank spacers) that fill the volume of the UDH 126 in configurations where having a derailleur may be undesirable. For example, a spacer or spacers may be used for an axle hub (e.g., for the thru axle wheel hub 70, and/or other axle hubs). The spacers may, for example, be spacers such as those described above, or other spacers.

When used in this specification and claims, the terms "comprises" and "comprising" and variations thereof mean that the specified features, steps or integers are included. The terms are not to be interpreted to exclude the presence of other features, steps or components.

Although certain example embodiments of the invention have been described, the scope of the appended claims is not intended to be limited solely to these embodiments. The scope of the invention is defined by the appended claims.

## Claims

1. A bicycle frame comprising:
a left wheel support (104) including:
a left hole (116) extending through the left wheel support (104) in a direction parallel to a wheel axis (103), the left hole (116) having a first width (W1) perpendicular to the wheel axis (103); and
a left slot (118) extending through the left wheel support (104) and in communication with the left hole (116), the left slot (118) having a second width (W2) smaller than the first width (W1) such that the left hole (116) and left slot (118) cooperatively form a left keyhole (114) through the left wheel support (104),
a right wheel support (106) including:
a right hole (122) extending through the right wheel support (106) in a direction parallel to the wheel axis (103), the right hole (122) having a third width (W3) perpendicular to the wheel axis (103); and
a right slot (124) extending through the right wheel support (106) and in communication with the right hole (122), the right slot (124) having a fourth width (W4) smaller than the third width (W3) such that the right hole (122) and right slot (124) cooperatively form a right keyhole (120) through the right wheel support (106), and
a right spacer (170) including:
a right torque arm (190) removably positioned in the right slot (124);
a right axle hole (196) having a drive flat;
an inner spacer (176) including the right torque arm (190) and the right axle hole; and
an outer spacer (174) non-rotatably positioned between the inner spacer (176) and the right wheel support (106), the outer spacer (174) including an axle slot (188) aligned with the right slot (124) in the right wheel support (106).

2. A bicycle frame as claimed in claim 1, wherein the first width (W1) is smaller than the third width (W3).

3. A bicycle frame as claimed in claim 1 or claim 2, wherein the second width (W2) is substantially the same as the fourth width (W4).

4. A bicycle frame as claimed in any of the preceding claims, further comprising a left spacer (154) removably positioned in the left keyhole (114), the left spacer (154) including a base portion (156) positioned in the left hole (116) and a left torque arm (158) positioned in the left slot (118).

5. A bicycle frame as claimed in claim 4, wherein the base portion (156) includes an axle hole (160) with a drive flat (164).

6. A bicycle comprising:
a front wheel (15);
a rear wheel (20) including a rear axle defining the wheel axis (103); and
the bicycle frame (25) of any of claims 1-5, wherein the bicycle frame (25) is supported on both the front wheel (15) and the rear wheel (20).

7. A method of converting a bicycle having a first wheel type to a bicycle having a second wheel type, the method comprising:
providing the bicycle having a frame supported on a first axle of the first wheel type, the first axle defining a wheel axis (103), the frame including a left wheel support (104) and a right wheel support (106) that are each adapted to receive and be supported by the first axle, wherein the left wheel support (104) includes:
a left hole (116). extending through the left wheel support (104) in a direction parallel to the wheel axis (103), the left hole (116) having a first width (W1) perpendicular to the wheel axis (103); and
a left slot (118) extending through the left wheel support (104) and in communication with the left hole (116), the left slot (118) having a second width (W2) smaller than the first width (W1) such that the left hole (116) and left slot (118) cooperatively form a left keyhole (114) through the left wheel support (104), and
wherein the right wheel support (106) includes:
a right hole (122) extending through the right wheel support (106) in a direction parallel to the wheel axis (103), the right hole (122) having a third width (W3) perpendicular to the wheel axis (103); and
a right slot (124) extending through the right wheel support (106) and in communication with the right hole (122), the right slot (124) having a fourth width (W4) smaller than the third width (W3) such that the right hole (122) and right slot (124) cooperatively form a right keyhole (120) through the right wheel support (106);
removing the first axle from the frame and from the first wheel type;
inserting a second axle of the second wheel type in the left keyhole (114);
sliding a left spacer (154) onto the second axle and into the left keyhole (114), the left spacer (154) including a base portion (156) positioned in the left hole (116) and a left torque arm (158) positioned in the left slot (118);
sliding a right spacer (170) onto the second axle and into the right keyhole (120), the right spacer (170) including:
a right torque arm (190) positioned in the right slot (124);
a right axle hole (196) having a drive flat;
an inner spacer (176) including the right torque arm (190) and the right axle hole; and
an outer spacer (174) non-rotatably positioned between the inner spacer (176) and the right wheel support (106), the outer spacer (174) including an axle slot (188) aligned with the right slot (124) in the right wheel support (106); and
tightening the second axle to the frame.

## Patentansprüche

1. Fahrradrahmen, umfassend:
eine linke Radhalterung (104), einschließend:
ein linkes Loch (116), das sich durch die linke Radhalterung (104) in einer Richtung parallel zu einer Radachse (103) erstreckt, wobei das linke Loch (116) eine erste Breite (W1) senkrecht zur Radachse (103) aufweist; und
einen linken Schlitz (118), der sich durch die linke Radhalterung (104) erstreckt und mit dem linken Loch (116) in Verbindung steht, wobei der linke Schlitz (118) eine zweite Breite (W2) aufweist, die kleiner ist als die erste Breite (W1), derart, dass das linke Loch (116) und der linke Schlitz (118) gemeinsam ein linkes Schlüsselloch (114) durch die linke Radhalterung (104) bilden,
eine rechte Radhalterung (106), einschließend:
ein rechtes Loch (122), das sich durch die rechte Radhalterung (106) in einer Richtung parallel zur Radachse (103) erstreckt, wobei das rechte Loch (122) eine dritte Breite (W3) senkrecht zur Radachse (103) aufweist; und
einen rechten Schlitz (124), der sich durch die rechte Radhalterung (106) erstreckt und mit dem rechten Loch (122) in Verbindung steht, wobei der rechte Schlitz (124) eine vierte Breite (W4) aufweist, die kleiner ist als die dritte Breite (W3), derart, dass das rechte Loch (122) und der rechte Schlitz (124) gemeinsam ein rechtes Schlüsselloch (120) durch die rechte Radhalterung (106) bilden, und
ein rechtes Distanzstück (170), einschließend:
einen rechten Drehmomentarm (190), der abnehmbar im rechten Schlitz (124) positioniert ist;
ein rechtes Achsloch (196) mit einer Antriebsfläche;
ein inneres Distanzstück (176), das den rechten Drehmomentarm (190) und das rechte Achsloch einschließt; und
ein äußeres Distanzstück (174), das drehfest zwischen dem inneren Distanzstück (176) und der rechten Radhalterung (106) positioniert ist, wobei das äußere Distanzstück (174) einen Achsschlitz (188) einschließt, der an dem rechten Schlitz (124) in der rechten Radhalterung (106) ausgerichtet ist.

2. Fahrradrahmen nach Anspruch 1, wobei die erste Breite (W1) kleiner ist als die dritte Breite (W3).

3. Fahrradrahmen nach Anspruch 1 oder Anspruch 2, wobei die zweite Breite (W2) im Wesentlichen gleich ist wie die vierte Breite (W4).

4. Fahrradrahmen nach einem der vorstehenden Ansprüche, ferner umfassend ein linkes Distanzstück (154), das abnehmbar im linken Schlüsselloch (114) positioniert ist, wobei das linke Distanzstück (154) einen Basisabschnitt (156), der im linken Loch (116) positioniert ist, und einen linken Drehmomentarm (158), der im linken Schlitz (118) positioniert ist, einschließt.

5. Fahrradrahmen nach Anspruch 4, wobei der Basisabschnitt (156) ein Achsloch (160) mit einer Antriebsfläche (164) einschließt.

6. Fahrrad, umfassend
ein Vorderrad (15);
ein Hinterrad (20), das eine Hinterachse einschließt, die die Radachse (103) definiert; und
den Fahrradrahmen (25) nach einem der Ansprüche 1 bis 5, wobei der Fahrradrahmen (25) sowohl auf dem Vorderrad (15) als auch auf dem Hinterrad (20) gelagert ist.

7. Verfahren zum Umbau eines Fahrrads mit einem ersten Radtyp in ein Fahrrad mit einem zweiten Radtyp, wobei das Verfahren umfasst:
Versehen des Fahrrads mit einem Rahmen, der auf einer ersten Achse des ersten Radtyps gelagert ist, wobei die erste Achse eine Radachse (103) definiert, und wobei der Rahmen eine linke Radhalterung (104) und eine rechte Radhalterung (106) einschließt, die jeweils dazu ausgelegt sind, die erste Achse aufzunehmen und von ihr gelagert zu werden, wobei die linke Radhalterung (104) einschließt:
ein linkes Loch (116), das sich durch die linke Radhalterung (104) in einer Richtung parallel zur Radachse (103) erstreckt, wobei das linke Loch (116) eine erste Breite (W1) senkrecht zur Radachse (103) aufweist; und
einen linken Schlitz (118), der sich durch die linke Radhalterung (104) erstreckt und mit dem linken Loch (116) in Verbindung steht, wobei der linke Schlitz (118) eine zweite Breite (W2) aufweist, die kleiner ist als die erste Breite (W1), derart, dass das linke Loch (116) und der linke Schlitz (118) gemeinsam ein linkes Schlüsselloch (114) durch die linke Radhalterung (104) bilden, und
wobei die rechte Radhalterung (106) einschließt:
ein rechtes Loch (122), das sich durch die rechte Radhalterung (106) in einer Richtung parallel zur Radachse (103) erstreckt, wobei das rechte Loch (122) eine dritte Breite (W3) senkrecht zur Radachse (103) aufweist; und
einen rechten Schlitz (124), der sich durch die rechte Radhalterung (106) erstreckt und mit dem rechten Loch (122) in Verbindung steht, wobei der rechte Schlitz (124) eine vierte Breite (W4) aufweist, die kleiner ist als die dritte Breite (W3), derart, dass das rechte Loch (122) und der rechte Schlitz (124) gemeinsam ein rechtes Schlüsselloch (120) durch die rechte Radhalterung (106) bilden;
Abnehmen der ersten Achse vom Rahmen und vom ersten Radtyp;
Einsetzen einer zweiten Achse des zweiten Radtyps in das linke Schlüsselloch (114);
Aufschieben eines linken Distanzstücks (154) auf die zweite Achse und in das linke Schlüsselloch (114), wobei das linke Distanzstück (154) einen Basisabschnitt (156) einschließt, der im linken Loch (116) positioniert wird, und einen linken Drehmomentarm (158), der im linken Schlitz (118) positioniert wird;
Aufschieben eines rechten Distanzstücks (170) auf die zweite Achse und in das rechte Schlüsselloch (120), wobei das rechte Distanzstück (170) einschließt:
einen rechten Drehmomentarm (190), der im rechten Schlitz (124) positioniert wird;
ein rechtes Achsloch (196) mit einer Antriebsfläche;
ein inneres Distanzstück (176), das den rechten Drehmomentarm (190) und das rechte Achsloch einschließt; und
ein äußeres Distanzstück (174), das drehfest zwischen dem inneren Distanzstück (176) und der rechten Radhalterung (106) positioniert wird, wobei das äußere Distanzstück (174) einen Achsschlitz (188) einschließt, der an dem rechten Schlitz (124) in der rechten Radhalterung (106) ausgerichtet wird; und
Festziehen der zweiten Achse am Rahmen.

## Revendications

1. Cadre de vélo comprenant :
un support de roue gauche (104) comportant :
un trou gauche (116) s'étendant à travers le support de roue gauche (104) dans une direction parallèle à l'axe de roue (103), le trou gauche (116) présentant une première largeur (W1) perpendiculaire à l'axe de roue (103) ; et
une fente gauche (118) s'étendant à travers le support de roue gauche (104) et en communication avec le trou gauche (116), la fente gauche (118) présentant une seconde largeur (W2) inférieure à la première largeur (W1) de telle sorte que le trou gauche (116) et la fente gauche (118) forment ensemble un trou de clavette gauche (114) à travers le support de roue gauche (104),
un support de roue droite (106) comportant :
un trou droit (122) s'étendant à travers le support de roue droit (106) dans une direction parallèle à l'axe de roue (103), le trou droit (122) présentant une troisième largeur (W3) perpendiculaire à l'axe de roue (103) ; et
une fente droite (124) s'étendant à travers le support de roue droite (106) et en communication avec le trou droit (122), la fente droite (124) présentant une quatrième largeur (W4) inférieure à la troisième largeur (W3) de telle sorte que le trou droit (122) et la fente droite (124) forment ensemble un trou de clavette droit (120) à travers le support de roue droite (106), et
une entretoise droite (170) comportant :
un bras de couple droit (190) positionné de manière amovible dans la fente droite (124) ;
un trou d'essieu droit (196) présentant un méplat d'entraînement ;
une entretoise interne (176) comportant le bras de couple droit (190) et le trou d'essieu droit ; et
une entretoise externe (174) positionnée de manière non-rotative entre l'entretoise interne (176) et le support de roue droite (106), l'entretoise externe (174) comportant une fente d'essieu (188) alignée avec la fente droite (124) dans le support de roue droite (106).

2. Cadre de vélo selon la revendication 1, dans lequel la première largeur (W1) est inférieure à la troisième largeur (W3).

3. Cadre de vélo selon la revendication 1 ou la revendication 2, dans lequel la seconde largeur (W2) est sensiblement la même que la quatrième largeur (W4).

4. Cadre de vélo selon l'une des revendications précédentes, comprenant en outre une entretoise gauche (154) positionnée de manière amovible dans le trou de clavette gauche (114), l'entretoise gauche (154) comportant une partie de base (156) positionnée dans le trou gauche (116) et un bras de couple gauche (158) positionné dans la fente gauche (118).

5. Cadre de vélo selon la revendication 4, dans lequel la partie de base (156) comprend un trou d'essieu (160) avec un méplat d'entraînement (164).

6. Vélo comprenant :
une roue avant (15) ;
une roue arrière (20) comportant un essieu arrière définissant l'axe de roue (103) ; et
le cadre de vélo (25) selon l'une des revendications 1 à 5, dans lequel le cadre de vélo (25) repose à la fois sur la roue avant (15) et sur la roue arrière (20).

7. Procédé de conversion d'un vélo présentant un premier type de roue en un vélo présentant un second type de roue, le procédé comprenant :
la fourniture du vélo présentant un cadre reposant sur un premier essieu du premier type de roue, le premier essieu définissant un axe de roue (103), le cadre comportant un support de roue gauche (104) et un support de roue droite (106) qui sont adaptés chacun pour recevoir et reposer sur le premier essieu, dans lequel le support de roue gauche (104) comporte :
un trou gauche (116) s'étendant à travers le support de roue gauche (104) dans une direction parallèle à l'axe de roue (103), le trou gauche (116) présentant une première largeur (W1) perpendiculaire à l'axe de roue (103) ; et
une fente gauche (118) s'étendant à travers le support de roue gauche (104) et en communication avec le trou gauche (116), la fente gauche (118) présentant une seconde largeur (W2) inférieure à la première largeur (W1) de telle sorte que le trou gauche (116) et la fente gauche (118) forment ensemble un trou de clavette gauche (114) à travers le support de roue gauche (104), et
dans lequel le support de roue droite (106) comporte :
un trou droit (122) s'étendant à travers le support de roue droit (106) dans une direction parallèle à l'axe de roue (103), le trou droit (122) présentant une troisième largeur (W3) perpendiculaire à l'axe de roue (103) ; et
une fente droite (124) s'étendant à travers le support de roue droite (106) et en communication avec le trou droit (122), la fente droite (124) présentant une quatrième largeur (W4) inférieure à la troisième largeur (W3) de telle sorte que le trou droit (122) et la fente droite (124) forment ensemble un trou de clavette droit (120) à travers le support de roue droite (106) ;
le démontage du premier essieu du cadre et du premier type de roue ;
l'insertion d'un second essieu du second type de roue dans le trou de clavette gauche (114) ;
le glissement d'une entretoise gauche (154) sur le second essieu et dans le trou de clavette gauche (114), l'entretoise gauche (154) comportant une partie de base (156) positionnée dans le trou gauche (116) et un bras de couple gauche (158) positionné dans la fente gauche (118) ;
le glissement d'une entretoise droite (170) sur le second essieu et dans le trou de clavette droit (120), l'entretoise droite (170) comportant :
un bras de couple droit (190) positionné dans la fente droite (124) ;
un trou d'essieu droit (196) présentant un méplat d'entraînement ;
une entretoise interne (176) comportant le bras de couple droit (190) et le trou d'essieu droit ; et
une entretoise externe (174) positionnée de manière non-rotative entre l'entretoise interne (176) et le support de roue droite (106), l'entretoise externe (174) comportant une fente d'essieu (188) alignée avec la fente droite (124) dans le support de roue droite (106) ; et le serrage du second essieu sur le cadre.
